# EUROPEAN PATENT APPLICATION

(11) **EP 3 373 637 A1**
(43) Date of publication of application: **12.09.2018**
(21) Application number: 16861961.7
(22) Date of filing: 24.10.2016
(51) Int. Cl.: H04W 24/10, H04W 72/04

(54) **USER DEVICE, BASE STATION, MEASUREMENT CONDITIONS NOTIFICATION METHOD, AND MEASUREMENT METHOD**

(30) Priority: 06.11.2015 JP 2015218985
(71) Applicant: NTT DOCOMO, INC., Chiyoda-ku Tokyo 100-6150 (JP)
(72) Inventor: TAKAHASHI, Hideaki, Tokyo 100-6150 (JP); TESHIMA, Kunihiko, Tokyo 100-6150 (JP); KIYOSHIMA, Kohei, Tokyo 100-6150 (JP); YAGYU, Kengo, Tokyo 100-6150 (JP)
(74) Representative: Hoffmann Eitle
(86) International application number: PCT/JP2016/081495
(87) International publication number: WO 2017/077898

(57) **Abstract**

There is provided a base station of a radio communication system supporting carrier aggregation, the base station including a generator configured to generate configuration information indicating whether measurement requirements on reception quality are allowed to be relaxed with respect to a frequency of a predetermined secondary cell or with respect to the predetermined secondary cell, among a plurality of secondary cells, and a transmitter configured to transmit the configuration information to a user apparatus.

## Description

### TECHNICAL FIELD

The present invention relates to a user apparatus, a base station a measurement requirement reporting method, and a measurement method.

### BACKGROUND ART

In the LTE (Long Term Evolution) system, carrier aggregation (CA: Carrier Aggregation) is adopted in which communication is performed using a plurality of carriers simultaneously with a predetermined bandwidth (maximum 20 MHz) as a basic unit. In carrier aggregation, a carrier serving as a basic unit is called a component carrier (CC: Component Carrier).

To perform CA, a PCell (Primary Cell) and a SCell (Secondary Cell) are configured for the user apparatus. The PCell is a highly reliable cell for securing connectivity, and the SCell is a subsidiary cell. The user apparatus initially connects to the PCell and may add the SCell depending on necessity. The PCell is similar to a single cell supporting RLM (Radio Link Monitoring), SPS (Semi-Persistent Scheduling), and so forth.

The SCell is added to the PCell and configured for the user apparatus. The addition and deletion of the SCell is performed by RRC (Radio Resource Control) signaling. As the SCell is in an inactive (deactivated) state immediately after the SCell is configured for the user apparatus, the SCell becomes enabled for communication (schedulable) for the first time by activating it.

In the usual LTE specifications, the maximum number of CCs that may be configured per user apparatus is five. In contrast, in LTE Rel. 13, CA enhancements that attempt to eliminate the maximum limit of five CCs bundled in CA have been considered in order to implement more flexible and higher speed radio communications, as well as allowing bundling of a large number of CCs for contiguous unlicensed ultra-wideband. For example, CA that bundles up to 32 CCs is being considered. It is assumed that the achievable peak rate is significantly increased by implementing CA bundling up to 32 CC.

### RELATED ART DOCUMENTS

### [NON-PATENT DOCUMENTS]

[NON-PATENT DOCUMENT 1] 3GPP TS 36.331 V12.7.0 (2015-09)
[NON-PATENT DOCUMENT 2] 3GPP TS 36.133 V13.0.0 (2015-07)
[NON-PATENT DOCUMENT 3] 3GPP written contributions R4-156056

### SUMMARY OF THE INVENTION

### PROBLEM TO BE SOLVED BY THE INVENTION

The user apparatus performs quality measurement of a cell with a frequency indicated by Measurement objects signaled by the RRC signaling, and reports the measured quality to the base station eNB at a predetermined timing.

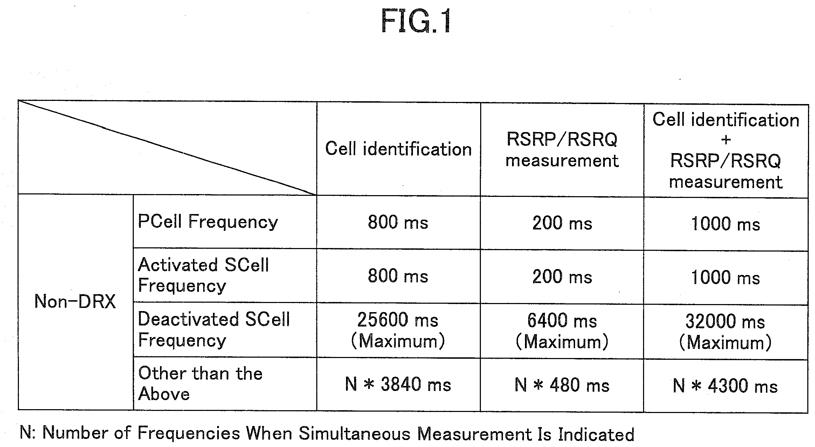

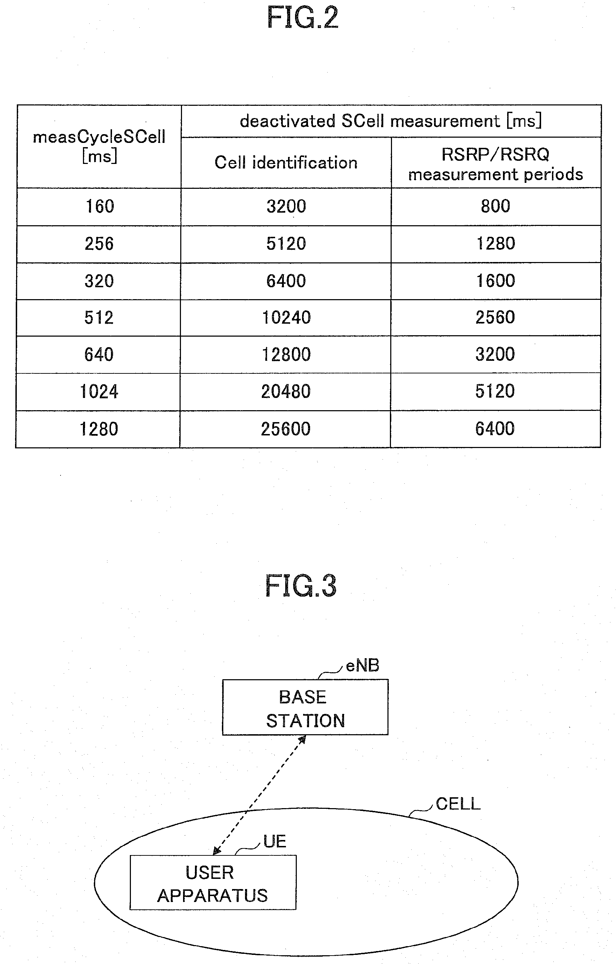

The measurement requirements for the user apparatus in a CA state to measure the quality, which is specified in Non-Patent Document 2, are described by referring to FIG. 1 and FIG. 2. In FIG. 1, "Cell identification" indicates a time allowed for detecting a cell (e.g., an adjacent cell) other than a serving cell. "RSRP/RSRQ measurement" indicates a time allowed for measuring RSRP (Reference Signal Receiving Power) or RSRQ (Reference Signal Receiving Quality) in the serving cell or the detected cell. "Other than the above" in FIG. 1 indicates measurement requirements for detecting and measuring quality of another cell with a frequency (Inter-frequency) differing from those of a PCell and SCell.

FIG. 2 illustrates details of measurement requirements relating to the frequency of the SCell in an inactive state (Deactivated SCell). For the SCell in the inactive state, the measurement requirements are uniquely determined corresponding to the configured value of "measCycleSCell" reported from the base station to the user apparatus in an RRC message. More specifically, "Cell identification" is obtained by "measCycleSCell" × 20, and "RSRP/RSRQ measurement" is obtained by "measCycleSCell" × 5. That is, the time related to the "frequency of Deactivated SCell" in FIG. 1 indicates the time related to a case where the "measCycleSCell" is 1280 ms.

As illustrated in FIG. 1, the measurement requirements are different for the frequencies of PCell and the SCell in an active state (Activated SCell) versus for the frequency of SCell in an inactive state (Deactivated SCell). Specifically, the measurement requirements for the frequency of the SCell in the inactive state are relaxed more than the measurement requirements for the frequencies of the PCell and the SCell in the active state. This is because the SCell in the inactive state basically performs no communication, and the measurement requirements are thus relaxed for the purpose of reducing the power consumption of the user apparatus.

In 3GPP, frequency combinations (band combinations) for CA using four or more CCs in DL (Downlink) is currently being studied. It is assumed that, for implementing CA using four or more CCs, the power consumption of the user apparatus increases more than or equal to usual poser consumption.

Accordingly, it has been proposed in 3GPP that, when CA is to be performed with 4CCs or more, the power consumption of the user apparatus is to be reduced by relaxing the measurement conditions for quality measurement for the third and subsequent SCells and by applying the measurement conditions for the SCell in the inactive state to the third and subsequent SCells, even if the third and subsequent SCells are in the active state. Further, it has been proposed to implement the control without adding new RRC signaling, for example, by relaxing the measurement requirements for quality measurement in a fixed manner for the SCell with a SCellIndex number that is greater than or equal to three, in order to distinguish the first and second SCells from the third and subsequent SCells (Non-Patent Document 2).

However, if it is attempted to determine in a fixed manner the SCell for which the measurement requirements are to be relaxed using SCellIndex, and if a base station itself attempts to change the SCell for which the measurement requirement are to be relaxed, the base station is required to add or delete the SCell every time the base station changes the Scell, which may result in an increase in RRC signaling. In addition, the base station is required to set SCellIndexes to 1 and 2 for the SCells for which the base station does not aim to relax the measurement requirements, which may induce operational restrictions.

The disclosed technology is developed in view of the above, and an object is to provide a technique that can freely control a cell for which measurement requirements on reception quality are allowed to be relaxed, in a radio communication system supporting carrier aggregation.

### MEANS FOR SOLVING THE PROBLEM

A base station according to the disclosed technology is a base station of a radio communication system supporting carrier aggregation, the base station including a generator configured to generate configuration information indicating whether measurement requirements on reception quality are allowed to be relaxed with respect to a frequency of a predetermined secondary cell or with respect to the predetermined secondary cell among a plurality of secondary cells; and a transmitter configured to transmit the configuration information to a user apparatus.

Further, a user apparatus according to the disclosed technology is a user apparatus of a radio communication system supporting carrier aggregation, the user apparatus including a receiver configured to receive, from a base station, configuration information indicating whether measurement requirements on reception quality are allowed to be relaxed with respect to a frequency of a predetermined secondary cell or with respect to the predetermined secondary cell, among a plurality of secondary cells; and a measurement unit configured to determine, when reception quality is to be measured on the frequency of the secondary cell in an active state, whether the reception quality is to be measured under measurement requirements more relaxed than measurement requirements allowed for measuring the reception quality of the frequency of the secondary cell in the active state based on the configuration information, and configured to measure the reception quality in accordance with the determined measurement requirements.

### ADVANTAGEOUS EFFECT OF THE PRESENT INVENTION

According to the disclosed technology, a technique is provided that can freely control a cell for which measurement requirements on reception quality are allowed to be relaxed, in a radio communication system supporting carrier aggregation.

### BRIEF DESCRIPTION OF THE DRAWINGS

FIG. 1 is a diagram illustrating measurement requirements for measuring quality;
FIG. 2 is a diagram illustrating measurement requirements for measuring quality;
FIG. 3 is a diagram illustrating a configuration of a radio communication system according to an embodiment;
FIG. 4 is a sequence diagram illustrating operations of the radio communication system according to the embodiment;
FIG. 5A is a diagram illustrating an example of an RRC message according to the embodiment;
FIG. 5B is a diagram illustrating an example of the RRC message according to the embodiment;
FIG. 6A is a diagram illustrating an example of the RRC message according to the embodiment;
FIG. 6B is a diagram illustrating an example of the RRC message according to the embodiment;
FIG. 7A is a diagram illustrating an example of the RRC message according to the embodiment;
FIG. 7B is a diagram illustrating an example of the RRC message according to the embodiment;
FIG. 8A is a diagram illustrating an example of the RRC message according to the embodiment;
FIG. 8B is a diagram illustrating an example of the RRC message according to the embodiment;
FIG. 9 is a diagram illustrating an example of MAC CE according to the embodiment;
FIG. 10 is a diagram illustrating an example of MAC CE according to the embodiment;
FIG. 11 is a diagram illustrating a functional configuration example of a base station according to the embodiment;
FIG. 12 is a diagram illustrating a functional configuration example of a user apparatus according to the embodiment;
FIG. 13 is a diagram illustrating a hardware configuration example of the base station according to the embodiment; and
FIG. 14 is a diagram illustrating a hardware configuration example of the user apparatus according to the embodiment.

### EMBODIMENTS FOR CARRYING OUT THE INVENTION

The following describes embodiments of the present invention with reference to the accompanying drawings. Note that the embodiments described below are merely examples and the embodiments to which the present invention is applied are not limited to the following embodiments. For example, it is assumed that a radio communication system according to the present embodiment supports LTE including LTE-Advanced; however, the present invention is not limited to LTE, and the present invention may also support other schemes with which CA is performed. In addition, the present invention may also be applicable to a radio communication system called fifth generation (5G).

In addition, CA (Carrier Aggregation) according to the present embodiment includes not only Intra-eNB CA but also includes Inter-eNB CA such as DC (Dual Connectivity). Further, the present invention may be applied to any of Interband CA, Intra-band-non-contiguous CA, and Intra-band contiguous CA.

### <SYSTEM CONFIGURATION AND OPERATIONAL OVERVIEW>

FIG. 3 is a diagram illustrating a configuration of a radio communication system according to an embodiment. The radio communication system according to the present embodiment is an LTE-based radio communication system, and includes, as illustrated in FIG. 3, a user apparatus UE and a base station eNB. The base station eNB, for example, remotely connects an RRE (remote radio device) and may form a small cell and a macro cell. The user apparatus UE and the base station eNB are capable of performing CA. FIG. 3 illustrates one user apparatus UE and one base station eNB each; however, it is merely an example. There may be two or more user apparatuses UE and base stations eNB. The user apparatus UE may have a capability (dual connectivity) to communicate with two or more base stations eNB simultaneously.

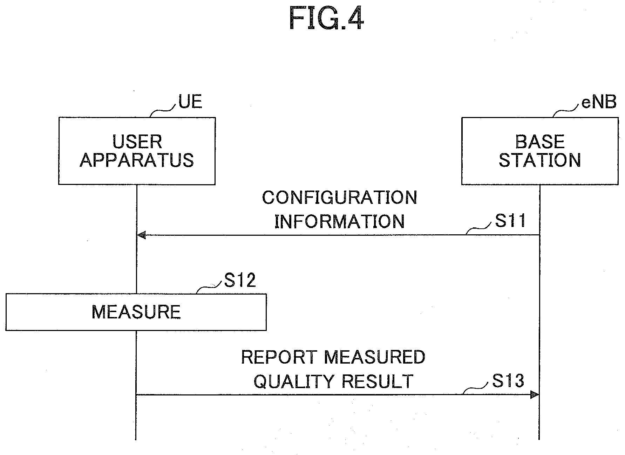

FIG. 4 is a sequence diagram illustrating operations of the radio communication system according to the embodiment. Basic operations of the radio communication system illustrated in FIG. 3 are described by referring to FIG. 4.

In step S11, the base station eNB transmits, to the user apparatus UE, configuration information indicating whether measurement requirements on reception quality are allowed to be relaxed with respect to a frequency of a predetermined SCell or the predetermined SCell, among multiple SCells.

In step S12, when the user apparatus UE measures the reception quality on the frequency of the SCell in an active state, the user apparatus UE determines, based on the configuration information reported from the base station eNB, whether the measurement of the reception quality is to be performed under measurement requirements more relaxed than the reference measurement requirements allowed for measuring the reception quality of the frequency of the SCell in the active state, and measures the reception quality in accordance with the determined measurement requirements.

Note that the "measurement of the reception quality on the frequency of a SCell in the active state" indicates "measurement of the RSRP or RSRQ of the SCell in the active state" or/and "detection of another cell with a frequency identical to that of the SCell in the active state and measurement of RSRP or RSRQ of the detected other cell.

In step S13, the user apparatus UE transmits a result of the quality measurement to the base station eNB at a timing specified in advance by the base station eNB. Note that the process of step S13 corresponds to the transmission process of RRC Measurement Report message defined in the current LTE. Events A1 to A6, B1, B2, C1, and C2 are defined as timings specified in advance by the base station eNB. For example, Event A1 indicates a case where the reception quality of the serving cell exceeds a predetermined threshold. Event A2 indicates a case where the reception quality of the serving cell is less than the predetermined threshold. Event A6 indicates a case where the reception quality of an adjacent cell exceeds a value obtained by adding a predetermined offset to the reception quality of the SCell.

### <PROCESS FLOW>

Subsequently, a detailed illustration is specifically given of a process (step S11 in FIG. 4) of reporting the SCell for which the measurement requirements on the reception quality are allowed to be relaxed from the base station eNB to the user apparatus UE, and a process (step S12 in FIG. 4) performed by the user apparatus UE.

### (PROCESS 1)

In a process 1, the base station eNB transmits, to the user equipment UE using an RRC message, configuration information (Measurement objects) indicating the frequency of the SCell for which the measurement requirements on the reception quality are allowed to be relaxed.

More specifically, when transmitting the measurement configuration IE (MeasConfigIE) to the user apparatus UE by using an RRC message (RRCConnection Reconfiguration), the base station eNB configures the "information indicating that the measurement requirements on the reception quality are allowed to be relaxed" in association with the frequency to be measured in the Measurement objects (MeasObjectEUTRA) included in the measurement configuration IE. Note that objects subject to measurement include a carrier frequency (Carrier Freq) subject to quality measurement and "measCycleSCell" illustrated in FIG. 2.

When measuring the reception quality of the frequency of the SCell in the active state, the user apparatus UE checks whether the Measurement objects (MeasObjectEUTRA) corresponding to the frequency of the SCell include "information indicating that the measurement requirements on the reception quality are allowed to be relaxed".

When the Measurement objects (MeasObjectEUTRA) corresponding to the frequency of the SCell include "information indicating that the measurement requirements for measuring reception quality are allowed to be relaxed", the user apparatus UE measures the reception quality in accordance with the measurement requirements for the frequency of the SCell in the inactive state, that is, in accordance with the measurement requirement (any of the measurement requirements in FIG. 2) corresponding to "measCycleSCell" included in the Measurement objects (MeasObjectEUTRA).

In contrast, when the Measurement objects (MeasObjectEUTRA) corresponding to the frequency of the SCell do not include "information indicating the measurement requirements on the reception quality that are allowed to be relaxed", the user apparatus UE measures the reception quality in accordance with the measurement requirements for the frequency of the SCell in the active state (i.e., the measurement requirements relating to the Activated SCell in FIG. 1) .

### [STANDARD SPECIFICATION MODIFICATION EXAMPLE]

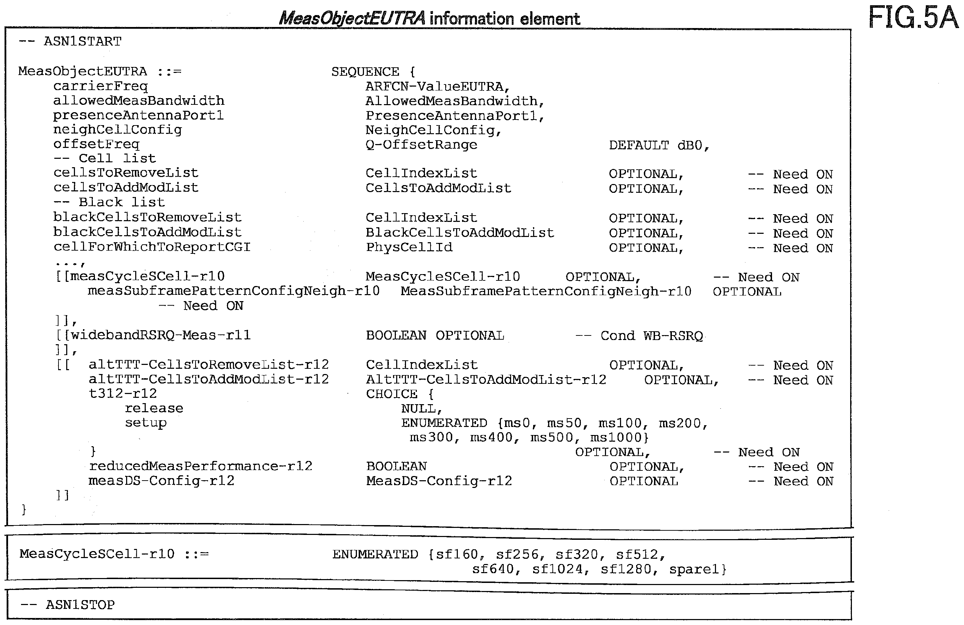

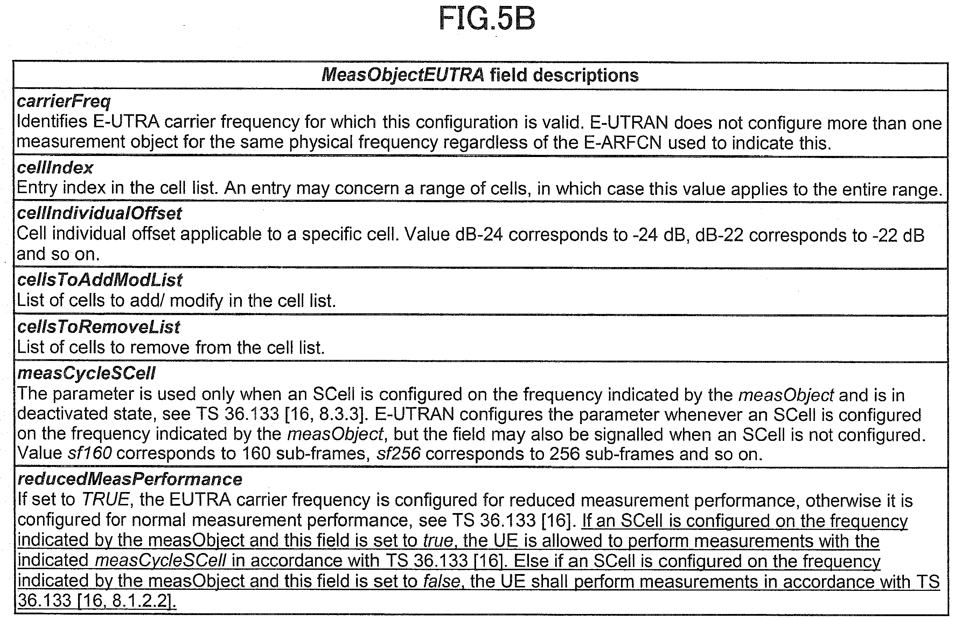

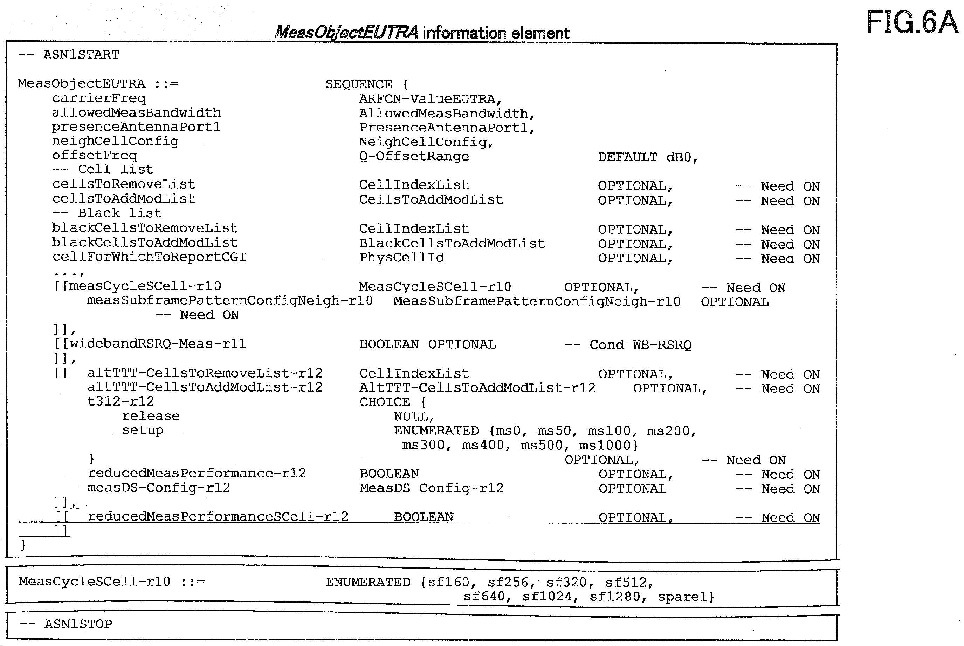

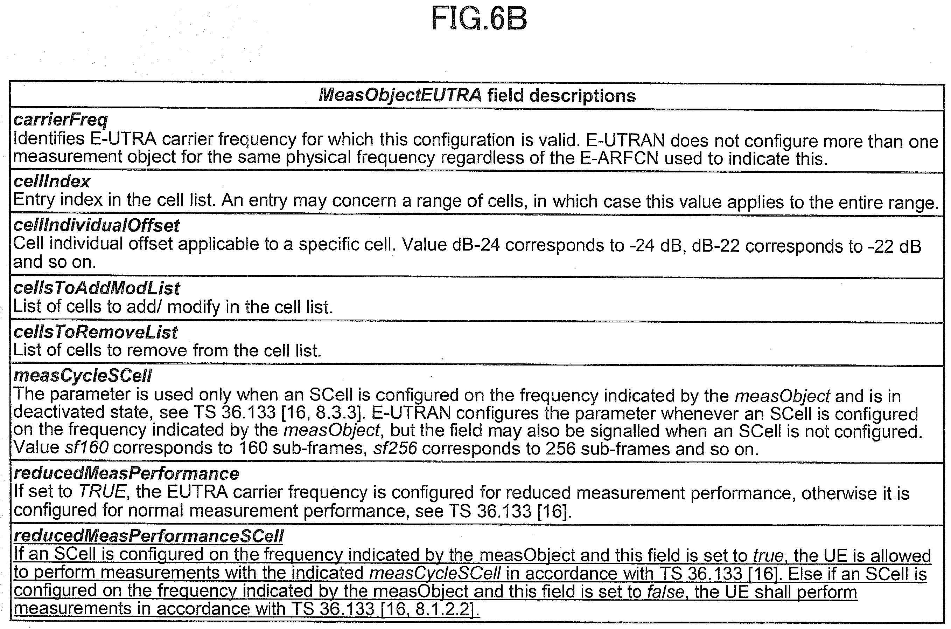

FIGS. 5A and 5B and FIGS. 6A and 6B illustrate elements to be added to the current standard specifications for configuring the above-described "information indicating that the measurement requirements on the reception quality are allowed to be relaxed" in the Measurement objects (MeasObjectEUTRA).

FIGS. 5A and 5B illustrate a modification to which the already defined "reducedMeasPerformance-r12" is applied instead of newly defining "information indicating the measurement requirements on the reception quality that are allowed to be relaxed". That is, when TRUE is configured in the "reducedMeasPerformance-r12" field, the user apparatus UE determines that the Measurement objects (MeasObjectEUTRA) include "information indicating the measurement requirements on the reception quality that are allowed to be relaxed".

FIGS. 6A and 6B illustrate a modification in which "reducedMeasPerformanceSCell" is newly defined as the "information indicating that the measurement requirements on the reception quality are allowed to be relaxed". The underlined part in FIG. 6A indicates an element to be added. As illustrated in FIG. 6B, a description of the additional element is added for "reducedMeasPerformanceSCell".

### (PROCESS 2)

In a process 2, which differs from the process 1, the base station eNB transmits, to the user apparatus UE by using an RRC message, configuration information (Measurement objects) indicating the frequency of the SCell for which the measurement requirements on the reception quality are not allowed to be relaxed.

More specifically, when transmitting the measurement configuration IE (MeasConfigIE) to the user apparatus UE by using an RRC message (RRCConnection Reconfiguration), the base station eNB configures the "information indicating that the measurement requirements on the reception quality are not allowed to be relaxed" in association with the frequency to be measured in the Measurement objects (MeasObjectEUTRA) included in the measurement configuration.

When measuring the reception quality of the frequency of the SCell in the active state, the user apparatus UE checks whether the Measurement objects (MeasObjectEUTRA) corresponding to the frequency of the SCell include "information indicating that the measurement requirements on the reception quality are not allowed to be relaxed".

When the "information indicating that the measurement requirements on the reception quality are not allowed to be relaxed" is included, the user apparatus UE measures the reception quality in accordance with the measurement requirements for the frequency of the SCell in the active state (i.e., the measurement requirements relating to the Activated SCell in FIG. 1).

In contrast, when the Measurement objects (MeasObjectEUTRA) corresponding to the frequency of the SCell do not include "information indicating that the measurement requirements on the reception quality are not allowed to be relaxed", the user apparatus UE measures the reception quality in accordance with the measurement requirements for the frequency of the SCell in the inactive state, that is, in accordance with the measurement requirement (any of the measurement requirements in FIG. 2) corresponding to "measCycleSCell" included in the Measurement objects (MeasObjectEUTRA).

### [STANDARD SPECIFICATION MODIFICATION EXAMPLE]

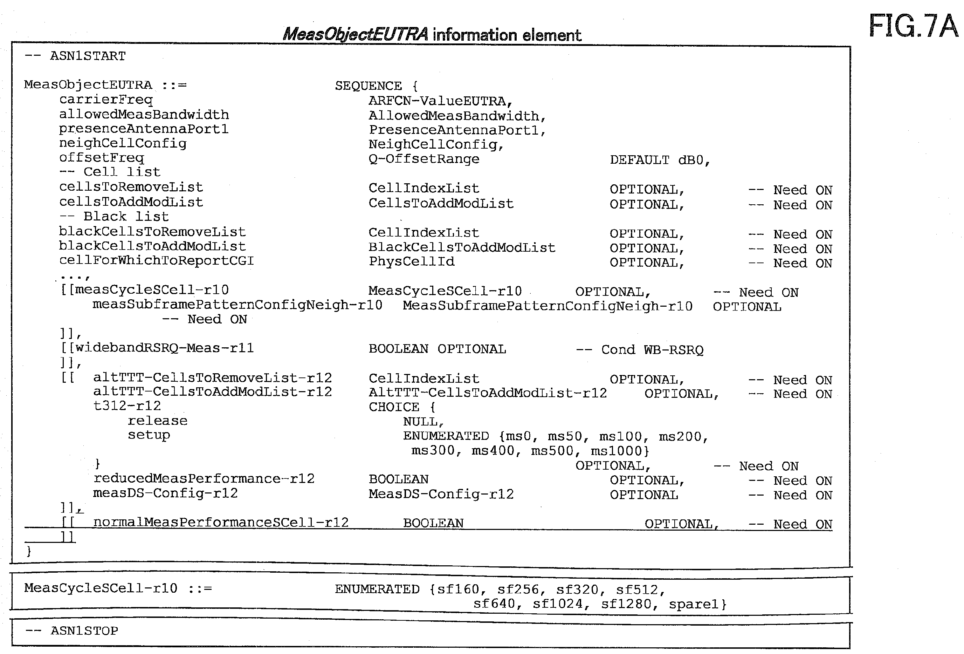

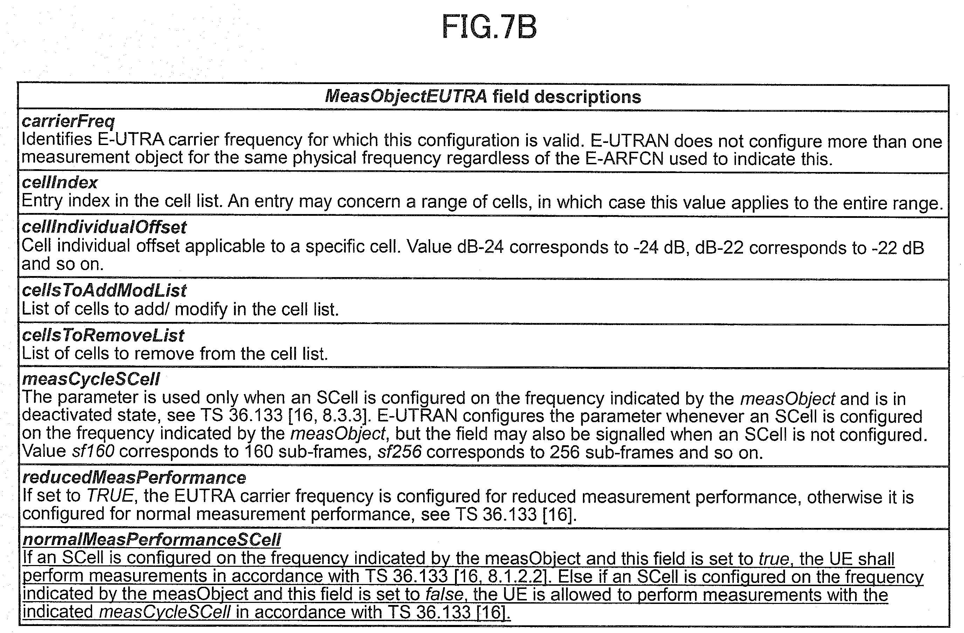

FIG. 7 illustrates elements to be added to the current standard specifications for configuring the above-described "information indicating that the measurement requirements on the reception quality are not allowed to be relaxed" in the Measurement objects (MeasObjectEUTRA).

FIG. 7 illustrates a modification in which "normalMeasPerformanceSCell" is newly defined as the "information indicating that the measurement requirements on the reception quality are not allowed to be relaxed". The underlined part in FIG. 7A indicates an element to be added. As illustrated in FIG. 7B, a description of the additional element is added for "normalMeasPerformanceSCell".

### (PROCESS 3)

In a process 3, the base station eNB transmits, to the user apparatus UE by using an RRC message, configuration information (Measurement objects) indicating the frequency of the SCell for which the measurement requirements on the reception quality are allowed to be relaxed, and the measurement requirements on the reception quality to be applied to the frequency of the SCell.

More specifically, when transmitting the measurement configuration IE (MeasConfigIE) to the user apparatus UE by using an RRC message (RRCConnection Reconfiguration message), the base station eNB configures the "information indicating the measurement requirements on the reception quality" in association with the frequency to be measured in the Measurement objects (MeasObjectEUTRA) included in the measurement configuration. The "information indicating the measurement requirements on the reception quality" is information similar to the "measCycleSCell" described above, and at least allows to configure a configured value of a cycle shorter than the configured value of "measCycleSCell".

When measuring the reception quality of the frequency of the SCell in the active state, the user apparatus UE checks whether the Measurement objects (MeasObjectEUTRA) corresponding to the frequency of the SCell include "information indicating the measurement requirements on the reception quality".

When the "information indicating the measurement requirements on the reception quality" is included, the user apparatus UE measures reception quality in accordance with the "information indicating the measurement requirements on the reception quality". Note that the user apparatus UE may recognize a value obtained by multiplying the configured value of "information indicating the measurement requirements on the reception quality" by 20, as a time allowed for detecting a cell, and may recognize a value obtained by multiplying the configured value of "information indicating the measurement requirements on the reception quality" by five, as the time allowed for measuring RSRP/RSRQ.

In contrast, when the "information indicating the measurement requirements on the reception quality" is not included, the user apparatus UE measures the reception quality in accordance with the measurement requirements for the frequency of the SCell in the active state (i.e., the measurement requirements for the frequency of the Activated SCell in FIG. 1).

### [STANDARD SPECIFICATION MODIFICATION EXAMPLE]

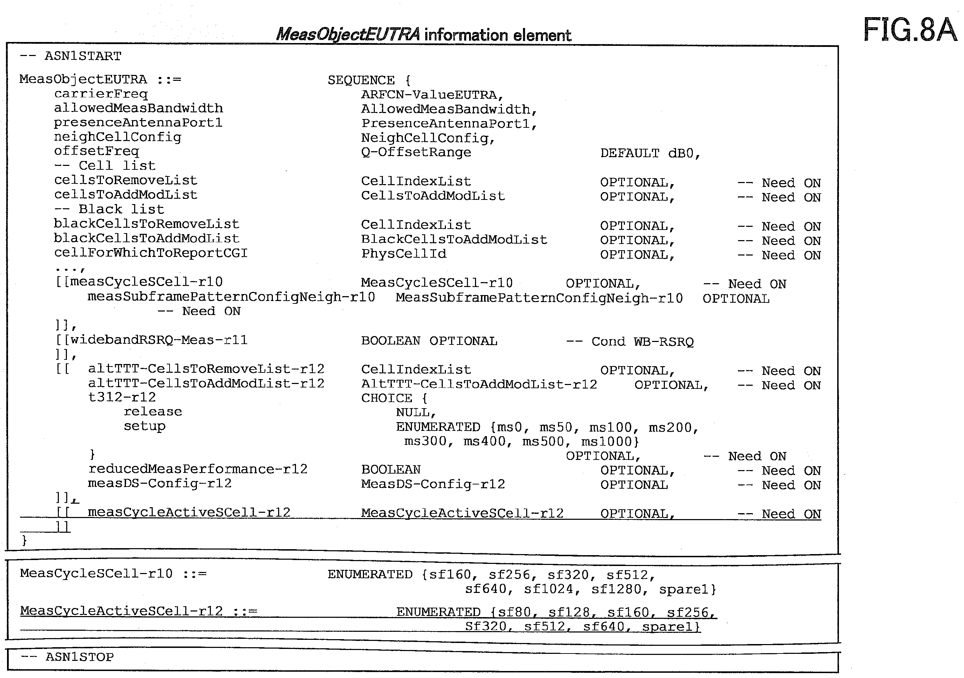

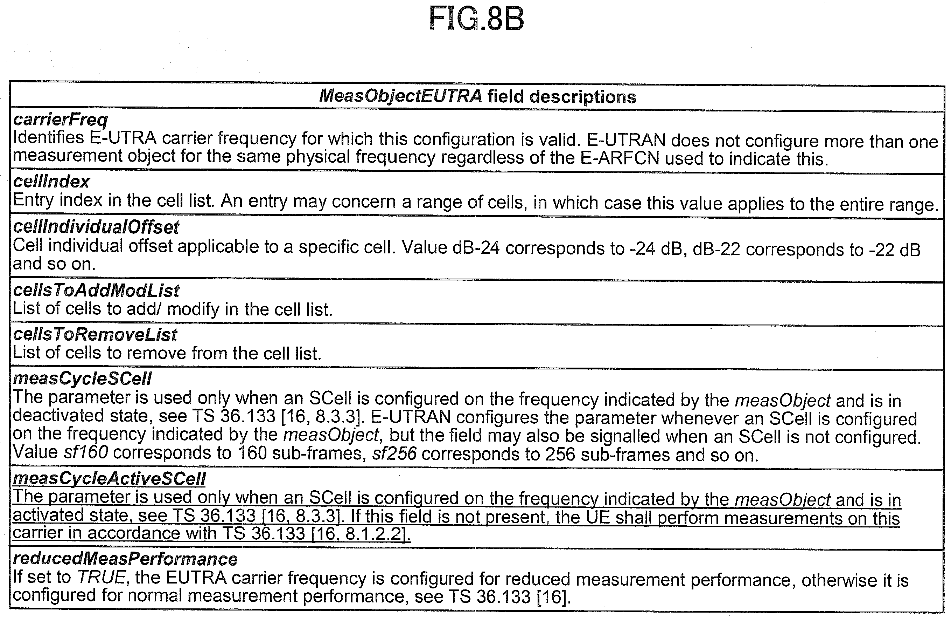

FIG. 8 illustrates examples of elements to be added to the current standard specifications for configuring the above-described "information indicating the measurement requirements on the reception quality" in the Measurement objects (MeasObjectEUTRA) that are reported from the base station eNB to the user apparatus UE.

FIG. 8 illustrates a modification in which "measCycleActiveSCell" is newly defined for the "information indicating the measurement requirements on the reception quality". The underlined part in FIG. 8A indicates an element to be added. As illustrated in FIG. 8B, a description of the additional element is added for "measCycleActiveSCell".

### (PROCESS 4)

In a process 4, the base station eNB transmits, to the user apparatus UE by using the MACPDU (Protocol Data Unit), configuration information (MAC CE [Media Access Control Control Element]) indicating the SCell for which the measurement requirements on the reception quality are allowed/not allowed to be relaxed.

More specifically, the base station eNB transmits, to the user apparatus UE, MAC CE specifying the SCellIndex of the SCell for which the measurement requirements on the reception quality are allowed/not allowed to be relaxed.

When measuring the reception quality of the frequency of the SCell in the active state, and the SCell corresponds to the SCell for which the measurement requirements on the reception quality are allowed to be relaxed, the user apparatus UE measures the reception quality in accordance with the measurement requirements on the reception quality that are allowed to be relaxed with respect to the SCell in an inactive state, that is, in accordance with the measurement requirements (any of the measurement requirements in FIG. 2) corresponding to the "measCycleSCell" included in the Measurement objects (MeasObjectEUTRA) corresponding to the frequency of the SCell.

In contrast, when the SCell corresponds to the SCell for which the measurement requirements on the reception quality are not allowed to be relaxed, the user apparatus UE measures the reception quality in accordance with the measurement requirements for the frequency of the SCell in the active state (i.e., the measurement requirements of the Activated SCell in FIG. 1).

### [STANDARD SPECIFICATION MODIFICATION EXAMPLE]

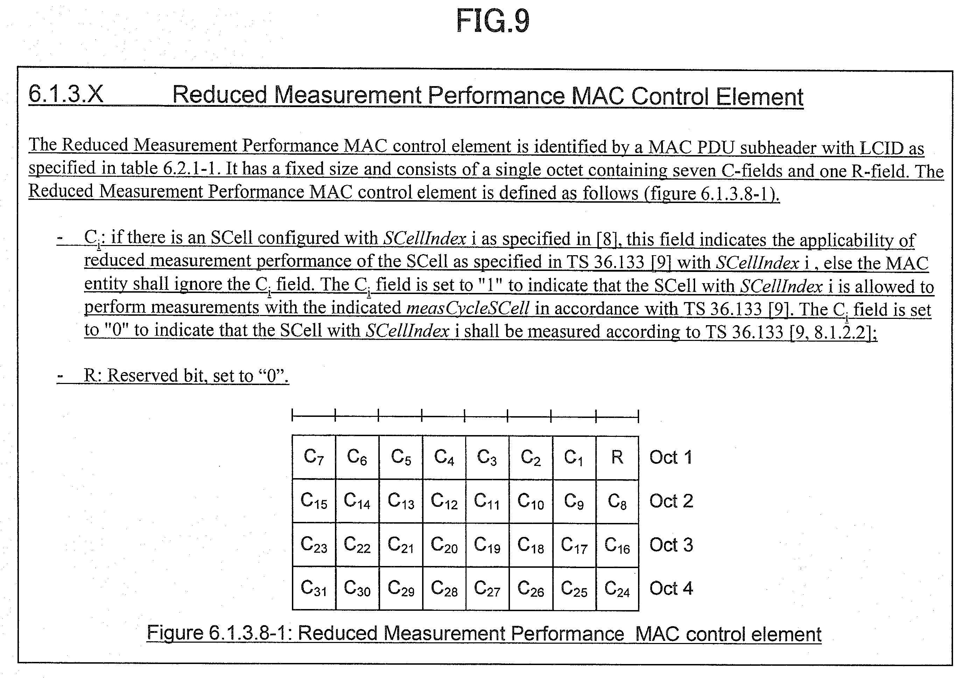

FIG. 9 illustrates an example of MAC CE that specifies the SCell for which the measurement requirements on the reception quality are allowed/not allowed to be relaxed. The MAC CE may be able to specify whether to allow or not to allow the measurement requirements on the reception quality to be relaxed for each of the SCells.

When "1" is set, the user apparatus UE measures the reception quality of the frequency of the SCell specified by the SCellIndex in accordance with the measurement requirements for the frequency of the SCell in the inactive state, that is, in accordance with the measurement requirements (any of the measurement requirements in FIG. 2) corresponding to the "measCycleSCell" included in the Measurement objects (MeasObjectEUTRA) corresponding to the frequency of the SCell specified by the SCellIndex.

In contrast, when "0" is set, the user apparatus UE measures the reception quality of the frequency of the SCell specified by the SCellIndex in accordance with the measurement requirements corresponding to the SCell in the active state.

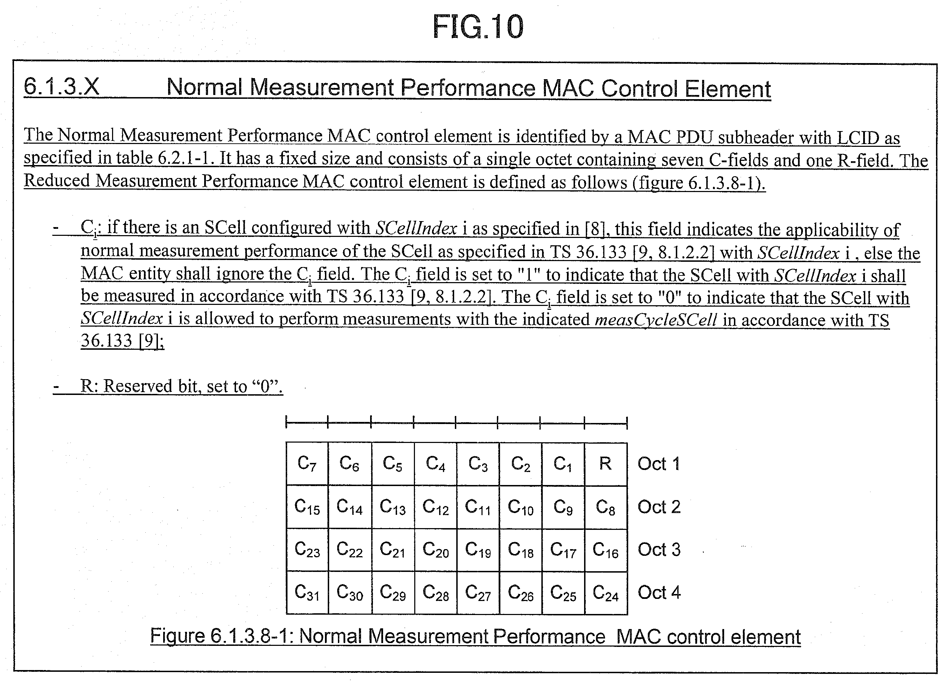

FIG. 10 illustrates an example of MAC CE that specifies the SCell for which the measurement requirements on the reception quality are allowed/not allowed to be relaxed. As FIG. 10 illustrates an example representing reversed designations for the configured values (0 and 1) in FIG. 9, a description of FIG. 10 is thus omitted.

### (SUPPLEMENTARY EXPLANATION OF PROCESSES)

In the process 4 described above, a part of the process 3 may be combined. More specifically, the "measCycleActiveSCell" described in the process 3 may be configured in the Measurement objects (MeasObjectEUTRA) in the process 4, and the user apparatus UE may measure the reception quality in accordance with the configured value of "measCycleActiveSCell" instead of "measCycleSCell".

The base station eNB can freely control cells for which the measurement requirements on the reception quality are allowed to be relaxed by using the above-described processes 1 to 4. As a result, the base station eNB can implement operations including not allowing the measurement requirements on the reception quality to be relaxed with respect to an SCell with low reception quality in order to prevent an increase in the latency in the transmission of the reception quality report (MeasurementReport) from the user apparatus to the base station, and allowing the measurement requirements on the reception quality to be relaxed with respect to an SCell with high reception quality in order to reduce power consumption of the user apparatus UE.

In addition, as described above, if an attempt is made to determine, in a fixed manner, the SCell for which the measurement requirements on the reception quality are to be relaxed without using a new RRC signaling, and if an attempt is made to change the SCell for which measuring the reception quality is to be relaxed, the base station eNB is required to add/delete the SCell each time. In contrast, the base station eNB can change the SCell for which the measurement requirements on the reception quality are to be relaxed by using any of the processes 1 to 4 without adding/deleting the SCell, which may result in reducing the amount of signaling.

Further, the relaxation of the measurement requirements on the reception quality is reported to the user apparatus UE by using the MAC CE in process 4, which makes it possible to switch the SCell for which the measurement requirements on the reception quality are allowed/not allowed to be relaxed more quickly than the processes 1 to 3 using an RRC message.

The measurement of the reception quality in the above processes may include the measurement of SINR (RS-SINR) in addition to or instead of the measurement of RSRP/RSRQ. When the measurement of the reception quality includes the measurement of SINR (RS-SINR), the measurement requirements on the reception quality in each of the processes indicates a time allowed for measuring RSRP/RSRQ/SINR (RS-SINR).

Note that the measurement of SINR (RS-SINR) refers to measuring SINR of RS (Reference Signal) included in PDCCH (Physical Downlink Control Channel) or/and PDSCH (Physical Downlink Shared Channel). In addition, the RS targeted for measuring the SINR includes CRS (Cell specific Reference Signal) or/and CSI-RS (Channel State Information-Reference Signal).

### <FUNCTIONAL CONFIGURATION>

The following illustrates functional configurations of the user apparatus UE and the base station eNB that are capable of executing the processes described above.

### (BASE STATION)

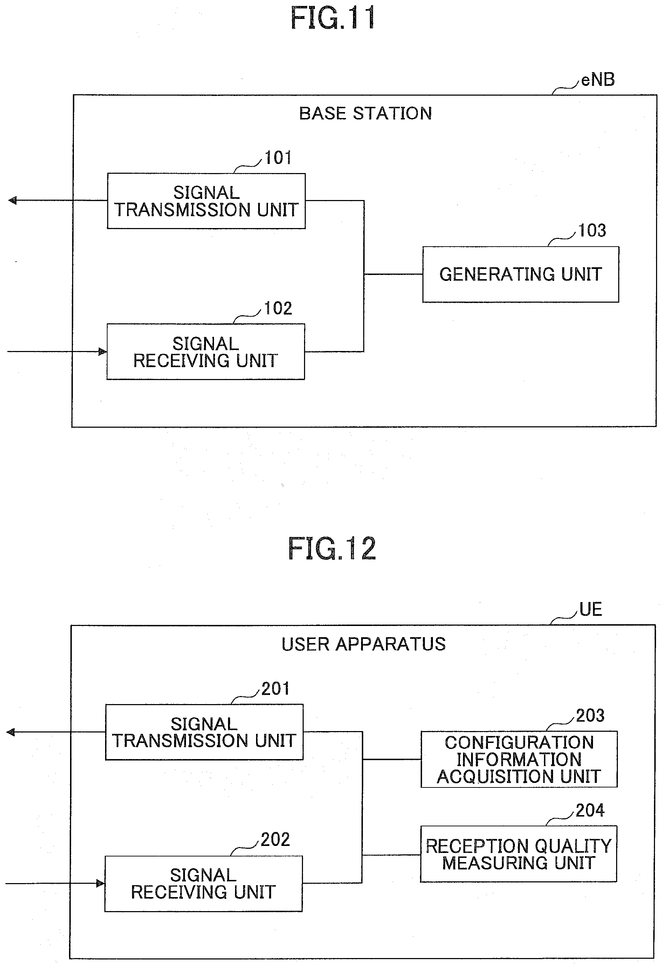

FIG. 11 is a diagram illustrating a functional configuration example of a base station according to the embodiment. As illustrated in FIG. 11, the base station eNB includes a signal transmission unit 101, a signal receiving unit 102, and a generating unit 103. FIG. 11 illustrates only main functional units of the base station eNB, and the base station eNB includes at least functions, which are not depicted, for executing operations conforming to LTE. The functional configuration of the user apparatus UE illustrated in FIG. 11 is only an example. Functional division and names of the functions may be any functional division and names, provided that the operation according to the embodiment can be executed. The base station eNB may be a single base station eNB, or may become MeNB or SeNB for executing DC in accordance with the configuration (Configuration).

The signal transmission unit 101 includes a function to generate various types of signals of the physical layer from the signals of a higher layer to be transmitted from the base station eNB and wirelessly transmit the generated signals. The signal receiving unit 102 includes a function to wirelessly receive various signals from the user apparatus UE and retrieves signals of a higher layer from the received physical layer signals. Each of the signal transmission unit 101 and the signal receiving unit 102 includes a function to execute a CA that performs communication by bundling multiple CCs. Each of the signal transmission unit 101 and the signal receiving unit 102 may further include a radio communication unit installed remotely from the main body (a controller) of the base station eNB, such as an RRE.

It is assumed that each of the signal transmission unit 101 and the signal receiving unit 102 includes a packet buffer and performs processes of a layer 1 (PHY), a layer 2 (MAC, RLC and PDCP), and a layer 3 (RRC). However, the functional configurations of the signal transmission unit 101 and the signal receiving unit 102 are not limited to the above-described examples.

The generating unit 103 generates configuration information indicating whether measurement requirements on reception quality are allowed to be relaxed with respect to a frequency of a predetermined SCell or the predetermined SCell, among multiple SCells configured between the base station eNB and the user apparatus UE. Note that the configuration information may be IE transmitted via an RRC message or MAC CE.

The generating unit 103 instructs the signal transmission unit 101 to transmit the configuration information to the user apparatus UE via an MAC PDU (Protocol Data Unit) or an RRC message.

### (USER APPARATUS)

FIG. 12 is a diagram illustrating a functional configuration example of a user apparatus according to the embodiment. As illustrated in FIG. 12, the user apparatus UE includes a signal transmission unit 201, a signal receiving unit 202, a configuration information acquisition unit 203, and a reception quality measuring unit 204. FIG. 12 merely illustrates the functional configuration particularly related to the embodiment of the present invention in the user apparatus UE, and the user apparatus UE may also include functions, which are not depicted, for performing, at the least, operations conforming to LTE. The functional configuration of the user apparatus UE illustrated in FIG. 12 is only an example. The functional division and the names of the functional units may be any functional division and names, provided that the operation according to the present embodiment can be executed.

The signal transmission unit 201 includes a function to generate various types of physical layer signals from higher layer signals to be transmitted from the user apparatus UE and wirelessly transmit the generated signals. The signal receiving unit 202 includes a function to wirelessly receive various signals from the base station eNB and retrieve higher layer signals from the received physical layer signals. Each of the signal transmission unit 201 and the signal receiving unit 202 includes a function to execute a CA such that communication is performed by bundling multiple CCs.

It is assumed that each of the signal transmission unit 201 and the signal receiving unit 202 includes a packet buffer and performs processes of a layer 1 (PHY), a layer 2 (MAC, RLC and PDCP), and a layer 3 (RRC). However, the functional configurations of the signal transmission unit 101 and the signal receiving unit 102 are not limited to the above-described examples.

The configuration information acquisition unit 203 acquires configuration information transmitted from the base station eNB and stores the acquired configuration information in a memory, etc.

The reception quality measuring unit 204 measures the reception quality (RSRP/RSRQ/SINR (RS-SINR), etc.) of the signals using the reference signals, etc., transmitted from the base station eNB. The reception quality measuring unit 204 also transmits a measured quality result report (Measurement Report) to the base station eNB at the timing specified in advance by the base station eNB.

When the reception quality measuring unit 204 measures the reception quality of the frequency of the SCell in an active state, the reception quality measuring unit 204 determines, based on the configuration information, whether the measurement of the reception quality is to be performed under measurement requirements more relaxed than the measurement requirements allowed for measuring the reception quality of the frequency of the SCell in the active state, and measures the reception quality in accordance with the determined measurement requirements.

### <HARDWARE CONFIGURATION>

The entire functional configuration of each of the above-described user equipment UE and base station eNB may be implemented by a hardware circuit (e.g., one or more IC chips), or a part of the functional configuration may be formed of a hardware circuit and the other part maybe implemented by a CPU and a program.

### (BASE STATION)

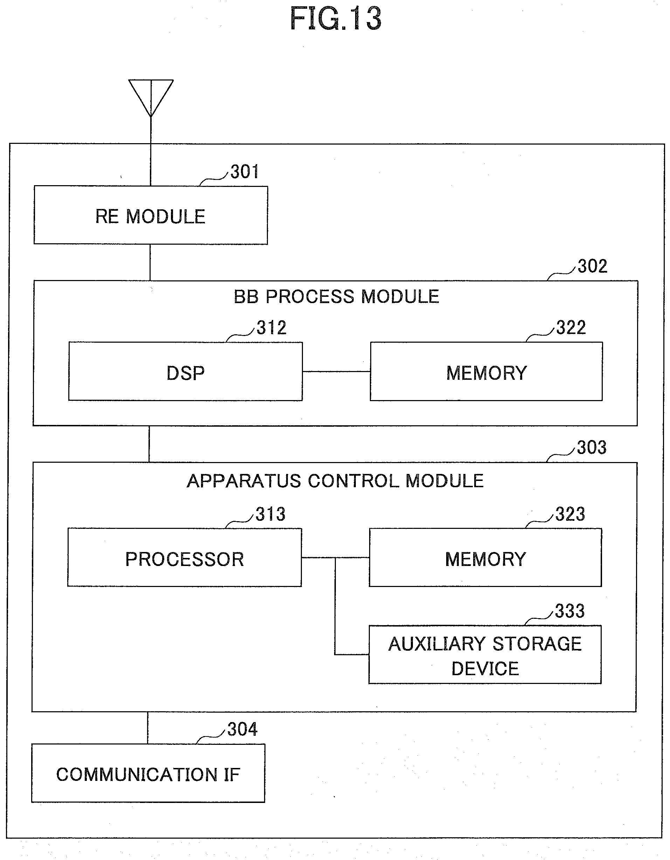

FIG. 13 is a diagram illustrating a hardware configuration example of the base station according to the embodiment. FIG. 13 illustrates a configuration closer to the implemented example than the example illustrated in FIG. 11. As illustrated in FIG. 13, the base station eNB includes an RE (Radio Equipment) module 301 configured to perform a process relating to radio signals, a BB (Base Band) process module 302 configured to perform a baseband signal process, an apparatus control module 303 configured to perform a process of a higher layer, etc., and a communication IF 304 serving as an interface for connecting to a network.

The RE module 301 applies D/A (Digital-to-Analog) conversion, modulation, frequency conversion, power amplification, etc., to the digital baseband signal received from the BB process module 302 to generate a radio signal to be transmitted from an antenna. The RE module 301 also applies frequency conversion, A/D (Analog to Digital) conversion, demodulation, etc., to the received radio signal to generate a digital baseband signal to transfer the generated digital baseband signal to the BB process module 302. The RE module 301 may include, for example, a part of the signal transmission unit 101 and a part of the signal receiving unit 102 illustrated in FIG. 11.

The BB process module 302 is configured to perform a process of mutually converting the IP packet and the digital baseband signal. A DSP (Digital Signal Processor) 312 is a processor configured to perform a signal process in the BB process module 302. The memory 322 is used as a work area of the DSP 312. The BB process module 302 includes, for example, a part of the signal transmission unit 101 and a part of the signal receiving unit 102 illustrated in FIG. 11.

The apparatus control module 303 is configured to perform an IP layer protocol process, an OAM (Operation and Maintenance) process, and the like. The processor 313 is configured to perform a process performed by the apparatus control module 303. The memory 323 is used as a work area of the processor 313. The auxiliary storage device 333 may, for example, be an HDD or the like, and is configured to store various configuration information and so forth for the base station eNB itself to operate. The apparatus control module 303 may, for example, include a part of the signal transmission unit 101, a part of the signal receiving unit 102, and a generating unit 103 illustrated in FIG. 11.

### (USER APPARATUS)

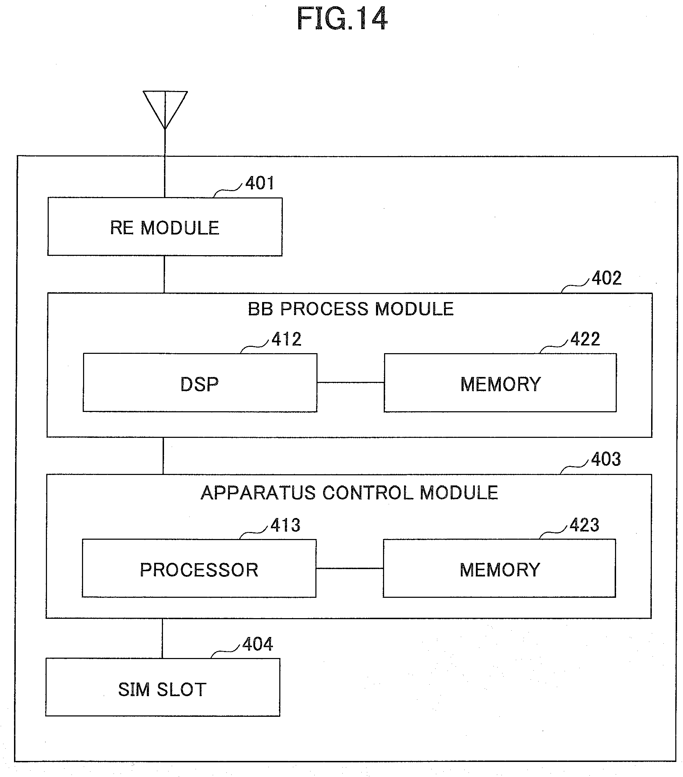

FIG. 14 is a diagram illustrating a hardware configuration example of the user apparatus according to the embodiment. FIG. 14 illustrates a configuration closer to the implemented example than the example illustrated in FIG. 12. As illustrated in FIG. 14, the user apparatus UE includes an RE module 401 configured to perform a process relating to radio signals, a BB process module 402 configured to perform a baseband signal process, an apparatus control module 403 configured to perform a process of a higher layer, etc., and a SIM slot 404 serving as an interface for accessing a SIM card.

The RE module 401 applies D/A conversion, modulation, frequency conversion, power amplification, etc., to the digital baseband signal received from the BB process module 402 to generate a radio signal to be transmitted from an antenna. The RE module 401 also applies frequency conversion, A/D conversion, demodulation, etc., on the received radio signal to generate a digital baseband signal to transfer the generated digital baseband signal to the BB process module 402. The RE module 401 may include, for example, a part of the signal transmission unit 201 and the signal receiving unit 202 illustrated in FIG. 12.

The BB process module 402 is configured to perform a process of mutually converting the IP packet and the digital baseband signal. A DSP (Digital Signal Processor) 412 is a processor configured to perform signal processing in the BB process module 402. The memory 422 is used as a work area of the DSP 412. The BB process module 402 includes, for example, a part of the signal transmission unit 201, a part of the signal receiving unit 202, and a part of the reception quality measuring unit 204 illustrated in FIG. 12.

The apparatus control module 403 is configured to perform an IP layer protocol process, various types of application processes, and so forth. The processor 413 is configured to perform a process performed by the apparatus control module 403. The memory 423 is used as a work area of the processor 413. The processor 413 reads data from and writes data into the SIM via the SIM slot 404. The apparatus control module 403 includes, for example, a part of the signal transmission unit 201, a part of the signal receiving unit 202, a part of the configuration information acquisition unit 203 and the reception quality measuring unit 204, which are illustrated in FIG. 12.

### <Conclusion>

As described above, according to the embodiment, there is provided a base station of a radio communication system supporting carrier aggregation, the base station including a generator configured to generate configuration information indicating whether measurement requirements on reception quality are allowed to be relaxed with respect to a frequency of a predetermined secondary cell or with respect to the predetermined secondary cell, among a plurality of secondary cells; and a transmitter configured to transmit the configuration information to a user apparatus. With this base station eNB, a technique is provided that can freely control a cell for which measurement requirements on reception quality are allowed to be relaxed, in a radio communication system supporting carrier aggregation.

The configuration information may further include measurement requirements on reception quality to be applied to the frequency of the predetermined secondary cell. As a result, when the user equipment UE measures the reception quality on the frequency of the SCell in the active state, the measurement requirements to be applied can be changed in various manners.

The measurement requirements on the reception quality may be a time allowed for detection of a cell on a frequency of a secondary cell in an active state, or a time allowed for measuring RSRP, RSRQ, or SINR. As a result, the measurement requirements for measuring, by the user equipment UE, the reception quality on the frequency of the SCell in the active state can be specifically defined.

The configuration information may be an information element to be transmitted through an RRC message or a MAC CE. As a result, the base station eNB can transmit the configuration information to the UE by various method.

Furthermore, according to the embodiment, there is provided a user apparatus of a radio communication system supporting carrier aggregation, the user apparatus including a receiver configured to receive, from a base station, configuration information indicating whether measurement requirements on reception quality are allowed to be relaxed with respect to a frequency of a predetermined secondary cell or with respect to the predetermined secondary cell, among a plurality of secondary cells; and a measurement unit configured to determine, when the reception quality is to be measured on the frequency of the secondary cell in an active state, whether the reception quality is to be measured under measurement requirements more relaxed than measurement requirements allowed for measuring the reception quality of the frequency of the secondary cell in the active state based on the configuration information, and configured to measure the reception quality in accordance with the determined measurement requirements. With this user apparatus UE, a technique is provided that can freely control a cell for which measurement requirements on reception quality are allowed to be relaxed, in a radio communication system supporting carrier aggregation.

Furthermore, according to the embodiment, there is provided a measurement requirements reporting method executed by a base station of a radio communication system supporting carrier aggregation, the measurement requirements reporting method including generating configuration information indicating whether measurement requirements on reception quality are allowed to be relaxed with respect to a frequency of a predetermined secondary cell or with respect to the predetermined secondary cell, among a plurality of secondary cells; and transmitting the configuration information to a user apparatus. With this measurement requirements reporting method, a technique is provided that can freely control a cell for which measurement requirements on reception quality are allowed to be relaxed, in a radio communication system supporting carrier aggregation.

Furthermore, according to the embodiment, there is provided a measurement method executed by a user apparatus of a radio communication system supporting carrier aggregation, the measurement method including receiving, from a base station, configuration information indicating whether measurement requirements on reception quality are allowed to be relaxed with respect to a frequency of a predetermined secondary cell or with respect to the predetermined secondary cell, among a plurality of secondary cells; and determining, when the reception quality is to be measured on the frequency of the secondary cell in an active state, whether the reception quality is to be measured under measurement requirements more relaxed than measurement requirements allowed for measuring the reception quality of the frequency of the secondary cell in the active state based on the configuration information, and measuring the reception quality in accordance with the determined measurement requirements. With this measurement method, a technique is provided that can freely control a cell for which measurement requirements on reception quality are allowed to be relaxed, in a radio communication system supporting carrier aggregation.

### <Additional embodiments>

The apparatuses (user apparatus UE/base station eNB) according to an embodiment may include a CPU and a memory, may be realized by having a program executed by the CPU (processor), may be realized by hardware such as hardware circuitry in which the logic described in an embodiment is included, or may be realized by a mixture of a program and hardware.

The embodiments are described above; however, the disclosed invention is not limited to these embodiments, and a person skilled in the art would understand various variations, modifications, replacements, etc. Specific examples of numerical values have been used for encouraging understanding of the present invention; however, these numeric values are merely examples and, unless otherwise noted, any appropriate values may be used. In the above description, partitioning of items is not essential to the present invention. Provisions described in more than two items may be combined if necessary. Provisions described in one item may be applied to provisions described in another item (as long as they do not contradict). In a functional block diagram, boundaries of functional units or processing units do not necessarily correspond to physical boundaries of parts. Operations of multiple functional units may be physically performed in a single part, or operations of a single functional unit may be physically performed by multiple parts. The order of steps in the above described sequences and flowcharts according to an embodiment may be changed as long as there is no contradiction. For the sake of convenience, the user apparatus UE and the base station eNB have been described by using functional block diagrams. These apparatuses may be implemented by hardware, by software, or by combination of both. The software which is executed by a processor included in a user apparatus UE according to an embodiment and the software which is executed by a processor included in a base station eNB may be stored in a random access memory (RAM), a flash memory, a read-only memory (ROM), an EPROM, an EEPROM, a register, a hard disk drive (HDD), a removable disk, a CD-ROM, a database, a server, or any other appropriate recording medium.

The present application is based on and claims the benefit of priority of Japanese Priority Application No. 2015-218985 filed on November 6, 2015, the entire content of Japanese Priority Application No. 2015-218985 is hereby incorporated by reference.

### DESCRIPTION OF REFERENCE SIGNS

- UE: user apparatus
- eNB: base station
- 101: signal transmission unit
- 102: signal receiving unit
- 103: generating unit
- 201: signal transmission unit
- 202: signal receiving unit
- 203: configuration information acquisition unit
- 204: reception quality measuring unit
- 301: RE module
- 302: BB process module
- 303: apparatus control module
- 304: communication IF
- 401: RE module
- 402: BB process module
- 403: apparatus control module
- 404: SIM slot

## Claims

1. A base station of a radio communication system supporting carrier aggregation, the base station comprising:
a generator configured to generate configuration information indicating whether measurement requirements on reception quality are allowed to be relaxed with respect to a frequency of a predetermined secondary cell or with respect to the predetermined secondary cell, among a plurality of secondary cells; and
a transmitter configured to transmit the configuration information to a user apparatus.

2. The base station according to claim 1, wherein the configuration information further includes measurement requirements on reception quality to be applied to the frequency of the predetermined secondary cell.

3. The base station according to claim 1 or 2, wherein the measurement requirements on the reception quality is a time allowed for detection of a cell on a frequency of a secondary cell in an active state, or a time allowed for measuring RSRP, RSRQ, or SINR.

4. The base station according to any one of claims 1 through 3, wherein the configuration information is an information element to be transmitted through an RRC message or a MAC CE.

5. A user apparatus of a radio communication system supporting carrier aggregation, the user apparatus comprising:
a receiver configured to receive, from a base station, configuration information indicating whether measurement requirements on reception quality are allowed to be relaxed with respect to a frequency of a predetermined secondary cell or with respect to the predetermined secondary cell, among a plurality of secondary cells; and
a measurement unit configured to determine, when the reception quality is to be measured on the frequency of the secondary cell in an active state, whether the reception quality is to be measured under measurement requirements more relaxed than measurement requirements allowed for measuring the reception quality of the frequency of the secondary cell in the active state based on the configuration information, and configured to measure the reception quality in accordance with the determined measurement requirements.

6. A measurement requirements reporting method executed by a base station of a radio communication system supporting carrier aggregation, the measurement requirements reporting method comprising:
generating configuration information indicating whether measurement requirements on reception quality are allowed to be relaxed with respect to a frequency of a predetermined secondary cell or with respect to the predetermined secondary cell, among a plurality of secondary cells; and
transmitting the configuration information to a user apparatus.

7. A measurement method executed by a user apparatus of a radio communication system supporting carrier aggregation, the measurement method comprising:
receiving, from a base station, configuration information indicating whether measurement requirements on reception quality are allowed to be relaxed with respect to a frequency of a predetermined secondary cell or with respect to the predetermined secondary cell, among a plurality of secondary cells; and
determining, when the reception quality is to be measured on the frequency of the secondary cell in an active state, whether the reception quality is to be measured under measurement requirements more relaxed than measurement requirements allowed for measuring the reception quality of the frequency of the secondary cell in the active state based on the configuration information, and measuring the reception quality in accordance with the determined measurement requirements.
